# EUROPÄISCHE PATENTSCHRIFT

(11) **EP 2 529 614 B1**
(45) Veröffentlichungstag und Bekanntmachung des Hinweises auf die Patenterteilung: **10.07.2013**
(21) Anmeldenummer: 12001808.0
(22) Anmeldetag: 16.03.2012
(51) Int. Cl.: A01D 34/66, A01D 57/20

(54) **Mähwerkskombination**
Mower combination
Combinaison de mécanisme de tonte

(30) Priorität: 31.05.2011 DE 202011101277 U
(43) Veröffentlichungstag der Anmeldung: 05.12.2012
(73) Patentinhaber: FELLA-Werke GmbH, 90537 Feucht (DE)
(72) Erfinder: Kinast, Ronnie, 92278 Ilschwang (DE); Kohl, Bernhard, 90537 Feucht (DE)
(74) Vertreter: Grünecker, Kinkeldey, Stockmair & Schwanhäusser

(56) Entgegenhaltungen:
- EP-A1- 0 779 020
- EP-A1- 1 444 880
- DE-A1- 19 804 250
- DE-U1-202005 016 403

## Beschreibung

Die Erfindung betrifft eine Mähwerkskombination gemäß Oberbegriff des Patentanspruchs 1.

Zur Erzielung größerer Arbeitsleistungen ist es bekannt, mehrere Mähwerke als Mähwerkskombination an einem Schlepper anzuordnen. Hierbei wird meist an der Schlepperfront ein Frontmähwerk angebaut, und mit wenigstens einem am Heck des Schleppers angeordneten Mähwerk kombiniert. Das heckseitige Mähwerk ist dabei meist seitlich der Schlepperlängsachse oder sogar außerhalb der Fahrspur quer orientiert. Oftmals werden heckseitig mindestens zwei Mähwerke platziert, welche in ihren Arbeitsstellungen rechts und links neben der Schlepperspur arbeiten. Zur direkten Weiterverarbeitung des von der ganzen Mähwerkskombination gemähten Ernteguts, z.B. durch einen Feldhäcksler oder Ladewagen, ist es vorteilhaft, das gesamte Erntegut, das aus der Arbeitsbreite der Mähwerkskombination resultiert, in einem einzigen kompakten Schwad abzulegen. Deshalb sind in Arbeitsfahrtrichtung hinter dem jeweiligen heckseitigen Mähwerk Querförderer wie Förderbänder oder Förderschnecken bekannt, die in Arbeitsstellung das gemähte Erntegut der heckseitig angeordneten Mähwerke in oder auf einen durch das frontseitige Mähwerk, z.B. innerhalb der Fahrspur des Schleppers, abgelegten Schwad fördern, oder in einen Mittelschwad bringen, und so insgesamt nur einen großen Schwad entstehen lassen. Da die das gemähte Erntegut weiterverarbeitenden Maschinen unterschiedliche Aufsammelbreiten haben können, ist es bekannt, den jeweiligen Querförderer in unterschiedlichen Relativpositionen quer zur Arbeitsfahrtrichtung am Mähwerk zu montieren, so dass das Abgabeende jedes Querförderers entsprechend der gewünschten Schwadbreite bzw. Erntegutmenge oder Aufsammelbreite einer Nachfolgemaschine eingestellt werden kann. Eine solche Verstellung des Querförderers ist bei erforderlicher Anpassung beispielsweise an unterschiedliche Erntegutmassen umständlich und zeitraubend, weil die Querfördervorrichtung entweder demontiert oder zumindest in ihren Montierpositionen gelöst, mühsam umgesetzt, und wieder festmontiert werden muss. Diese Handhabung ist umständlich und zeitraubend und erfordert nicht nur die Bereithaltung entsprechender Werkzeuge, sondern auch erhebliches Geschick des Bedieners.

Aus DE 20 2005 016 403 U1 sitzt jeder Querförderer der Mähwerkskombination an einem Schlitten, der entlang einer Schlittenbahn quer zur Arbeitsfahrtrichtung durch beispielsweise einen doppelt wirkenden Hydrozylinder verstellbar ist. Die Schlittenbahn ist an einem Tragrahmen des Querförderers abgehängt, der an einem Tragarm des Tragrahmens angelenkt ist. Als Stellglied kann ein Druckzylinder verwendet werden, und zwar ein doppelt wirkender Hydraulik- oder Pneumatikzylinder, oder alternativ ein Gewinde antritt mit Stellmotor und Gewindespindel oder Zahnstangenantrieb mit Stellmotor und Antriebsritzel. Die Aufhängung des Querförderers ist baulich aufwendig und relativ instabil, da nur eine mittige, mit längerer Betriebszeit zu mechanischen Problemen neigende Abstützung vorgesehen ist.

Weiterer Stand der Technik ist enthalten in EP 1 444 880 A1, EP 0 779 020 A und DE 198 04 250 A.

Der Erfindung liegt die Aufgabe zugrunde, eine Mähwerkskombination der eingangs genannten Art im Hinblick auf eine einfache und bequeme Anpassung des jeweiligen Querförderers an beispielsweise unterschiedliche Emtegutmassen oder Nachfolgemaschinen zu ermöglichen.

Die gestellte Aufgabe wird mit den Merkmalen des Patentanspruchs 1 gelöst.

Um eine Anpassung des Querförderers bei sich ändernden Arbeitsbedingungen der Mähwerkskombination oder für unterschiedliche Nachfolgemaschinen vornehmen zu können, braucht der Querförderer nicht mehr demontiert oder gelockert, umgesetzt und wieder festgesetzt zu werden, sondern der Bediener kann die Anpassung bequem und einfach und in sehr kurzer Zeit nur mit Hilfe der verstellgliedbetätigten Verstellvorrichtung vornehmen. Dies ist gegebenenfalls bequem vom Schlepper aus und/oder sogar im Arbeitsbetrieb zu bewerkstelligen. Da die Komfortsteigerung möglichst kein oder nur wenig mehr Gewicht mit sich bringen soll und dennoch in jeder Einstellposition des Querförderers dieser ordnungsgemäß und stabil relativ zum zugeordneten Mähwerk positioniert sein muss, ist der Querförderer an einem quer zur Arbeitsfahrtrichtung relativ zu einem Tragrahmen des Querförderers quer zur Arbeitsfahrtrichtung verstellbaren Aufhängungsteil einer am Tragrahmen montierten Aufhängung angebracht, wobei die Aufhängung mindestens ein Verstellglied zum Verstellen des Querförderers aufweist. Im Hinblick auf hohe Funktionssicherheit, geringes Gewicht, gute Stabilität und einfache Betätigung ist es zweckmäßig, wenn die Aufhängung als Lenkerparallelogramm bzw. Gelenkviereck ausgebildet ist. Die obere Seite des Lenkerparallelogramms kann am Tragrahmen montiert sein. Die untere Seite, die vorzugsweise zur oberen parallel ist, kann der den Querförderer lagernde Aufhängungsteil sein. Zwischen den oberen und unteren Seiten erstrecken sich mindestens zwei zueinander im Wesentlichen zumindest parallele Lenker, die bei Betätigung des Stellgliedes die untere Seite bzw. den Aufhängungsteil quer zur Arbeitsfahrtrichtung verlagern. Im nicht parallelen Gelenkviereck kann z.B. durch die gewählte Geometrie vorgegeben werden, z.B. bei einer Einwärtsverstellung des Querförderers z.B. dessen inneres Abgabeende bewusst weiter anzuheben als das andere Ende, um das Erntegut oben auf den Mittelschwad zu werfen.

Vorzugsweise ist der Tragrahmen an einem Mähwerksrahmen des Mähwerks direkt montiert, und zwar so, dass er bei Bedarf aus einer Arbeitsstellung relativ zum Mähwerk in eine Außerbetriebsstellung verschwenkbar ist.

Die Verstellvorrichtung ist zweckmäßig so ausgebildet, dass das Verstellglied nicht nur für die Verstellung verantwortlich ist, sondern den Querförderer zusätzlich auch in der jeweils gewählten Einstellposition quer zur Arbeitsfahrtrichtung festlegt. Alternativ kann das Verstellglied nur zur Verstellung eingesetzt werden. Dann kann eine lösbare und einrückbare Arretierung, z.B. in der oder für die Aufhängung, vorgesehen sein, die den Querförderer in der jeweils gewählten Einstellposition festlegt und das Stellglied entlastet. Dies ermöglicht die Verwendung eines relativ einfachen oder schwachen Stellgliedes nur zur Verstellung, während größere Reaktionskräfte im Betrieb über die zusätzliche Arretierung abgetragen werden.

Um günstige kinematische Verhältnisse bei der Verstellung und eine stabilisierende Aussteifung des Lenkerparallelogramms zu erzielen, ist es zweckmäßig, wenn das Stellglied bezüglich der Lenker schräggestellt ist, und an den oberen und unteren Seiten des Lenkerparallelogramms oder Gelenkvierecks angelenkt wird.

In einer baulich einfachen Ausführungsform, z.B. mit einem mechanischen Stellglied, lässt sich dieses in vorbestimmten Stufen verstellen. Eine bequeme und feinfühlige Anpassung ist jedoch dann möglich, wenn das Stellglied alternativ stufenlos verstellbar ist.

Zweckmäßig handelt es sich bei dem Stellglied um eine mechanische oder elektromotorische Verstellspindel oder einen elektromechanischen Aktuator oder einen doppelt wirkenden Hydrozylinder. Auch ein einseitig beaufschlagbarer Hydrozylinder oder ein Hydro-Federspeicherzylinder kann als Stellglied dienen. Die Erfindung umfasst auch die Verwendung von mehr als einem Stellglied in der Aufhängung.

Um eine einwandfreie Kraftübertragung und stabile Abstützung sicherzustellen, kann es zweckmäßig sein, wenn jeder Lenker an der unteren Seite des Lenkerparallelogramms in einer, vorzugsweise doppelwandigen, an dem als Querträger ausgebildeten Aufhängungsteil montierten Stützstruktur angelenkt ist. Diese Stützstruktur kann wenigstens eine Anlenkstelle auch für das Stellglied aufweisen. Mehrere verteilte Anlenkstellen für das Stellglied ermöglicht die wahlweise Einstellung bestimmter relativer Schrägwinkel zwischen dem Stellglied und den Lenkern.

Das den Querförderer aufweisende Mähwerk der Mähwerkskombination kann eines von zwei Mähwerken einer Heck-Mäheinheit sein. Die Mähwerke der Heck-Mäheinheit sind, vorzugsweise mit einem Zwischenabstand etwa entsprechend der Spurweite des Schleppers, an quer zur Arbeitsfahrtrichtung orientierten Schwenkarmen eines mittigen Traggestells angeordnet, und zweckmäßig in eine Transportstellung schwenkbar. Dabei hat zumindest eines der Mähwerke einen über die Verstellvorrichtung verstellbaren Querförderer. Vorzugsweise weist sogar jedes Mähwerk der Heck-Mäheinheit an seinem Mähwerksrahmen einen über eine Verstellvorrichtung verstellbaren Querförderer auf.

Die Mähwerkskombination ist in einer zweckmäßigen Ausführungsform zusätzlich mit einem Frontmähwerk, z.B. mit zwei nebeneinanderliegenden Frontmähwerken, ausgestaltet, vorzugsweise mit einer Mittelschwadablage innerhalb der Spurweite des Schleppers. Jeder Querförderer der Heck-Mäheinheit ist dann mit seinem quer zur Arbeitsfahrtrichtung und nach innen orientierten Abgabeende so platziert, dass das Abgabeende zu einem aus der Mittelschwadablage abgelegten Mittelschwad weist, vorzugsweise derart, dass die von jedem Querförderer einwärts geförderte Erntegutmasse seitlich angrenzend an den Mittelschwad oder auf bzw. in den Mittelschwad abgeworfen wird, je nach gewählter Einstellposition des Querförderers.

Schließlich ist es zweckmäßig, wenn die jeweilige Verstellvorrichtung an der Mähwerkskombination und/oder auf dem mit der Mähwerkskombination bestückten Schlepper, z.B. elektrisch oder hydraulisch, fernbetätigbar ist, um den Bediener hohen Komfort bei der Verstellung zu bieten.

Anhand der Zeichnungen werden Ausführungsformen des Erfindungsgegenstandes erläutert. Es zeigen:
- Fig. 1: eine Draufsicht auf eine Mähwerkskombination an einem Schlepper bei Herstellung eines breiten Mittelschwades,
- Fig. 2: die Mähwerkskombination von Fig. 1 in einer umgestellten Arbeitsposition bei der Bildung eines gegenüber Fig. 1 schmaleren Mittelschwades,
- Fig. 3: eine Perspektivdarstellung eines Teiles der Mähwerkskombination in einer Arbeitsstellung,
- Fig. 4: eine Rückansicht eines in Fig. 1 rechtsseitigen Teiles der Mähwerkskombination, in Arbeitsstellung, und
- Fig. 5: eine Seitenansicht eines in Fig. 1 linksseitigen Teiles der Mähwerkskombination, in Blickrichtung von der Mitte nach außen, mit in Arbeitsstellung befindlichem Querförderer.

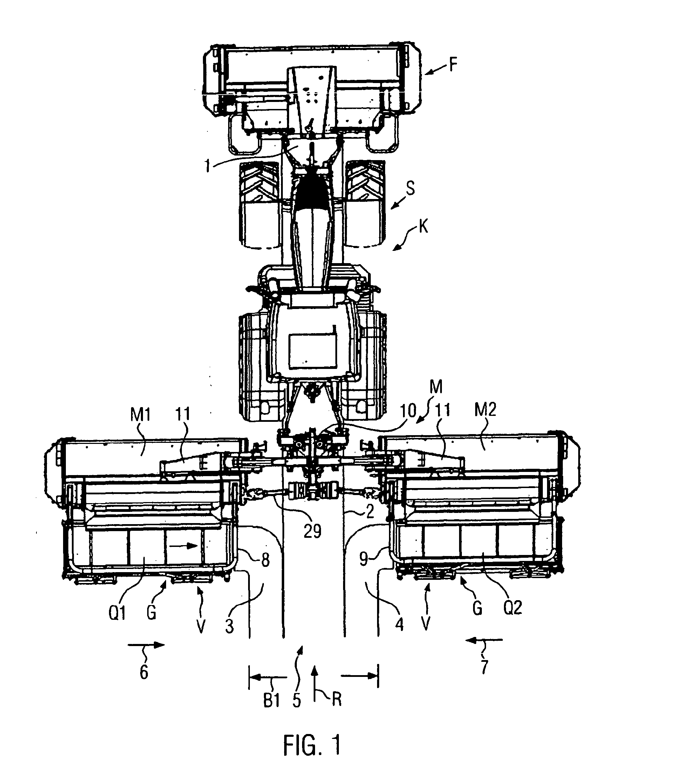

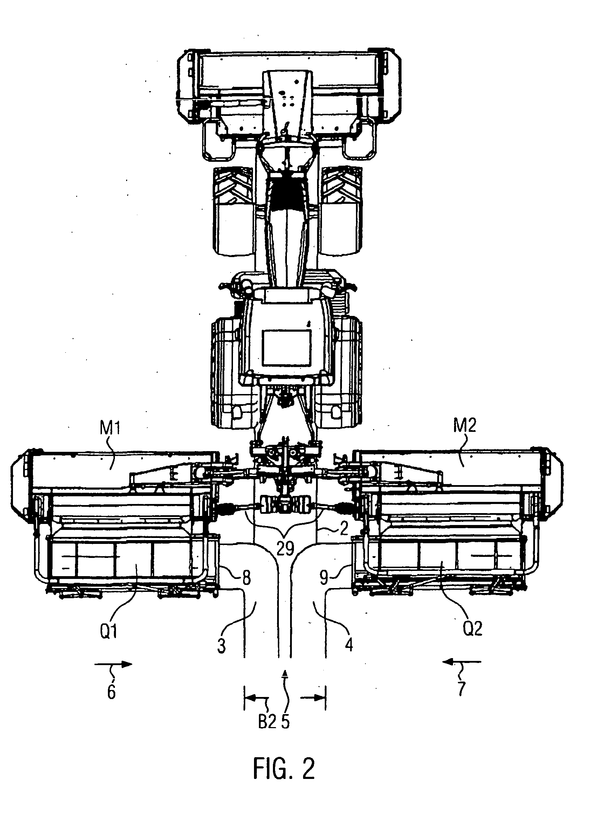

Die Fig. 1 und 2 zeigen jeweils in Draufsicht eine Mähwerkskombination K im Arbeitseinsatz an einem Schlepper S. Die Mähwerkskombination K umfasst in der dargestellten Ausführungsform ein Frontmähwerk F aus einem oder zwei Frontmähwerken mit einer Mittelschwadablage 1, sowie eine Heck-Mäheinheit M, in der gezeigten Ausführungsform, aus zwei in etwa außerhalb der Spurweite des Schleppers quer zur Arbeitsfahrtrichtung R arbeitenden Heck-Mähwerken M1, M2. In der Heck-Mäheinheit M könnte auch nur an einer Seite ein Mähwerk M1 oder M2 vorgesehen sein. Im Mähwerk M1, M2 kann ein Konditionierer enthalten sein (Antriebswellen 29), der das Erntegut nach oben hinten auf den Querförderer Q1, Q2 abgibt.

Jedes gezeigte Heck-Mähwerk M1, M2 ist mit einem Querförderer Q1, Q2 ausgestattet (gegebenenfalls nur ein Heck-Mähwerk M1 oder M2), der mit einem einwärts weisenden Abgabeende 8, 9 zum Mittelschwad 2 weist. Jeder Querförderer Q1, Q2 ist über eine stellgliedbetätigte (Stellglied G) Verstellvorrichtung V quer zur Arbeitsfahrtrichtung und relativ zum Mähwerk M1 oder M2 verstellbar, so dass sein Abgabeende 8, 9 entweder weiter von der Mitte entfernt ist (Fig. 1) oder näher an der Mitte (Fig. 2) liegt. In den Einstellpositionen der Querförderer Q1, Q2 in Fig. 1 wird von den Mähwerken M1, M2 gemähtes Erntegut seitlich als Schwaden 3, 4 an einen Mittelschwad 2 aus der Mittelschwadablage 1 des Frontmähwerks F angelegt, um einen breiteren Mittelschwad 5 (Breite B1), beispielsweise für eine Nachfolgemaschine mit einer vorbestimmten Aufnahmebreite, zu formen.

In den Einstellpositionen der Querförderer Q1, Q2 in Fig. 2 sind diese hingegen weiter nach innen verstellt als in Fig. 1, so dass die Schwaden 3, 4 in den Mittelschwad 2 eingebracht werden, um einen höheren Mittelschwad 5 mit einer geringeren Breite B2 als in Fig. 1 zu formen.

Jedes Mähwerk M1, M2 der Heck-Mäheinheit M ist über einen Schwenkarm 11, vorzugsweise aushebbar, an einem Traggestell 10 angeschlossen, welches mit der Heckanbauvorrichtung des Schleppers S gekoppelt ist.

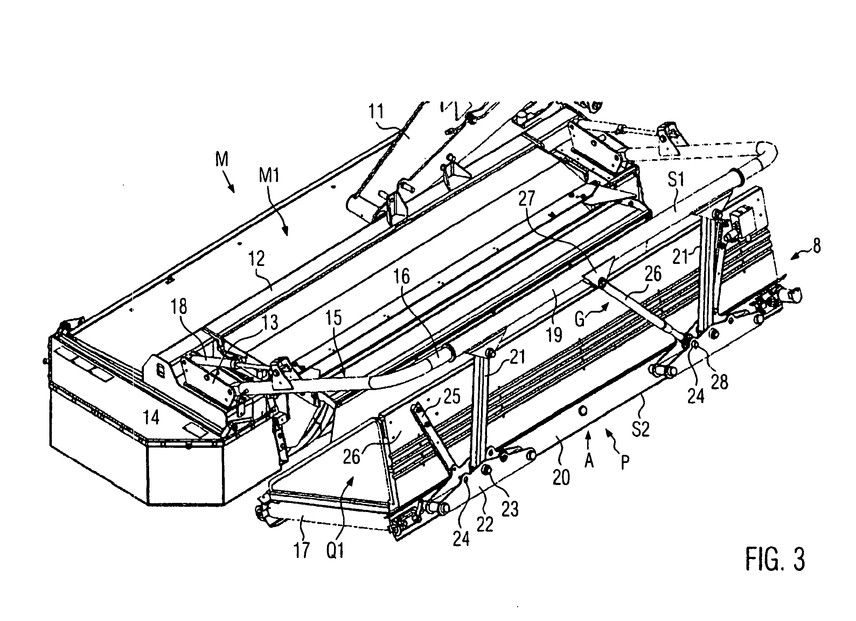

Fig. 3 verdeutlicht in einer Draufsicht von außen schräg oben das Heck-Mähwerk M1 der Heck-Mäheinheit M in Arbeitsstellung und mit daran in Arbeitsstellung angeordnetem Querförderer Q1. An einen Mähwerksrahmen 12 des Heck-Mähwerks M1 ist der Schwenkarm 11 (Fig. 1) angeschlossen. An dem Mähwerksrahmen 12 ist über eine Lagerung 13 ferner ein Tragrahmen 15 für den Querförderer Q1 montiert. Der Tragrahmen 15 ist ein U-förmiger Bügel mit einem Querholm 16, der in etwa quer zur Arbeitsfahrtrichtung R orientiert ist, und ist um Achsen 14 in der Lagerung 13 schwenkbar, und zwar beispielsweise mit Hilfe von Hydrozylindern 18 in den Lagerungen 13, gegebenenfalls um den Querförderer Q1 zwischen einer Arbeitsstellung und einer Außerbetriebsstellung (nicht gezeigt) nachzustellen.

An dem Querholm 16 des Tragrahmens 15 ist eine Aufhängung A des Querförderers Q1 montiert. Die Aufhängung A ist hier als Lenkerparallelogramm P mit einer oberen Seite S1, 19 an dem Querholm 16 einer unteren Seite S2 in Form eines einen Aufhängungsteil 20 bildenden Querträgers, und zumindest zwei im Wesentlichen zueinander parallelen Lenkern 21 ausgebildet, die zwischen den oberen und unteren Seiten S1, S2 angelenkt sind. Aus Stabilitätsgründen könnten auch mehr als zwei Lenker 21 vorgesehen sein. Die unteren Enden der Lenker 21 sind in Stützstrukturen 22 angelenkt, die an der Hinterseite des Aufhängungsteils 20, beispielsweise an zwei beabstandeten Stellen, montiert sind. Neben den Anlenkbolzen 23 für die Lenker 21 weisen die Stützstrukturen 22 zumindest eine Anlenkstelle 24 auf, die, beispielsweise über einen Anlenkbolzen 28 zum Anlenken eines unteren Endes des Stellgliedes G nutzbar ist, dessen oberes Ende in einem Lagerbock 27 an der oberen Seite S1, 19 so angelenkt ist, dass das Stellglied G in Bezug auf die Lenker 21 schräggestellt ist. Beispielsweise liegt das untere Ende des Stellgliedes G näher bei der unteren Anlenkstelle eines Lenkers 21, als das obere Ende des Stellgliedes G bei der oberen Anlenkstelle des Lenkers 21.

In der in Fig. 3 gezeigten Einstellung schließen das Stellglied G und der benachbarte Lenker 21 beispielsweise einen Winkel von etwa 45° ein.

Der Querförderer Q1, beispielsweise ein Bandförderer mit einem Förderband 17, gegebenenfalls bestückt mit Querleisten, oder eine Förderschnecke, ist zumindest am Aufhängungsteil 20 verankert, gegebenenfalls zusammen mit einer Rückwand 26 des Querförderers Q1, die über Halterungen 25 mit dem Aufhängungsteil 20 und/oder den Stützstrukturen 22 verbunden ist.

Die Aufhängung A könnte alternativ ein nicht paralleles Lenkerviereck sein (nicht gezeigt), bei dessen Verstellung über das Stellglied G aufgrund der Geometrie mit nicht parallelen Lenkern ein Ende des Querförderers Q1, z.B. das innenliegende Abgabeende 8, 9 bei einer Einwärtsverstellung höher angehoben wird als das äußere Ende.

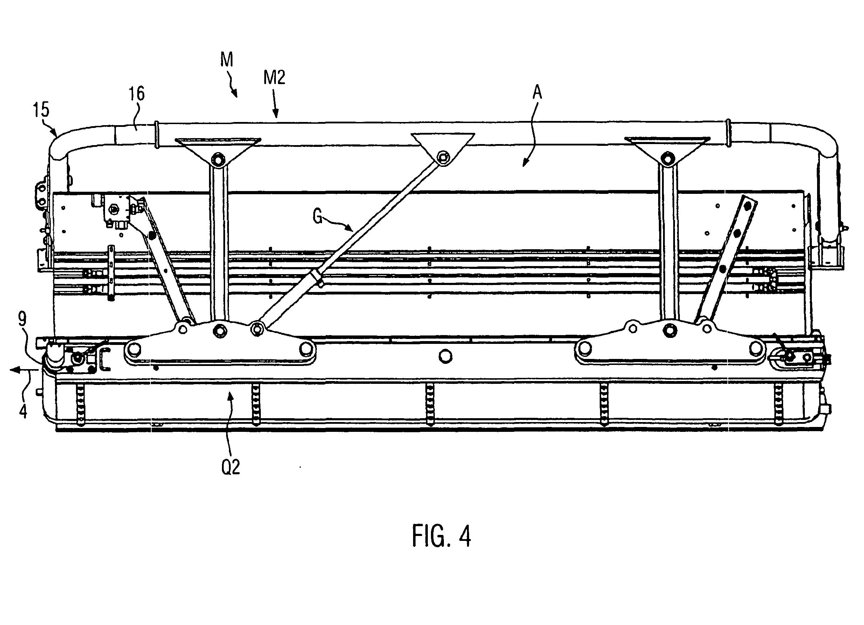

Das Stellglied G (es könnten auch mehr als ein Stellglied vorgesehen sein) ist beispielsweise eine Schraubspindel 26, die manuell in ihrer Länge verstellbar ist, um den Aufhängungsteil 20 zusammen mit dem Querförderer Q1 relativ zum Mähwerk M1 quer zur Arbeitsfahrtrichtung R zu verlagern. Alternativ kann das Stellglied G eine elektromotorisch betriebene Schraubspindel oder ein doppelt wirkender Hydrozylinder 26' oder ein einseitig beaufschlagbarer Federspeicher-Hydrozylinder sein. Auch ein elektromechanischer Aktuator ist als Stellglied G nutzbar. Das Stellglied G ist, falls es sich nicht rein manuell betätigen lässt, zweckmäßig fernbetätigbar, entweder an geeigneter Stelle an der Mähwerkskombination K und/oder im oder am Schlepper S, beispielsweise unter Nutzen des elektrischen oder hydraulischen Versorgungssystems des Schleppers. Im Übrigen könnte (Fig. 4) das Stellglied G auch ein einfach wirkender Hydrozylinder sein, der eine Verstellung des Querförderers Q2 nach links vornimmt, wobei die Rückstellung des Querförderers Q2 bei entlastetem oder teilentlastetem Hydrozylinder unter durch das Gewicht in der Aufhängung wirkenden Rückstellkräften erfolgt.

In der gezeigten Ausführungsform dient das jeweilige Stellglied G auch zum Festlegen des Querförderers Q1 in der jeweiligen Einstellposition. Alternativ könnte zusätzlich eine Arretierung vorgesehen sein (nicht gezeigt), die den Querförderer Q1 in der jeweiligen Einstellposition festlegt. Das Stellglied G ist entweder stufenlos verstellbar oder in vorbestimmten Stufen. Eine Betätigung des Stellgliedes G führt dazu, dass das Abgabeende 8, 9 des jeweiligen Querförderers Q1 relativ zum Heck-Mähwerk M1 bzw. M2 weiter zur Mitte verstellt wird, oder weiter von der Mitte weg, als gezeigt, und um vom Mähwerk M1, M2 gemähtes Erntegut in einem Mittelschwad abzulegen, an einen schon vorliegenden Mittelschwad anzulegen, oder in diesen einzubringen. Andererseits lassen sich die Hydrozylinder 18 benutzen, um den Querförderer Q1, Q2 relativ zum Mähwerk M1, M2 in eine Außerbetriebsstellung auszuheben. Wird das Mähwerk M1, M2 in eine Transportposition überführt, dann folgt der Querförderer Q1, Q2 dieser Überführung über die am Tragrahmen 15 montierte Aufhängung A.

Fig. 4 zeigt eine Heckansicht der in Fig. 1 und 2 rechten Seite der Mähwerkskombination K mit dem Mähwerk M2 und dessen Querförderer Q2, wobei das Abgabeende 9 des Querförderers Q2, an der der Schwad 4 austritt, links positioniert ist.

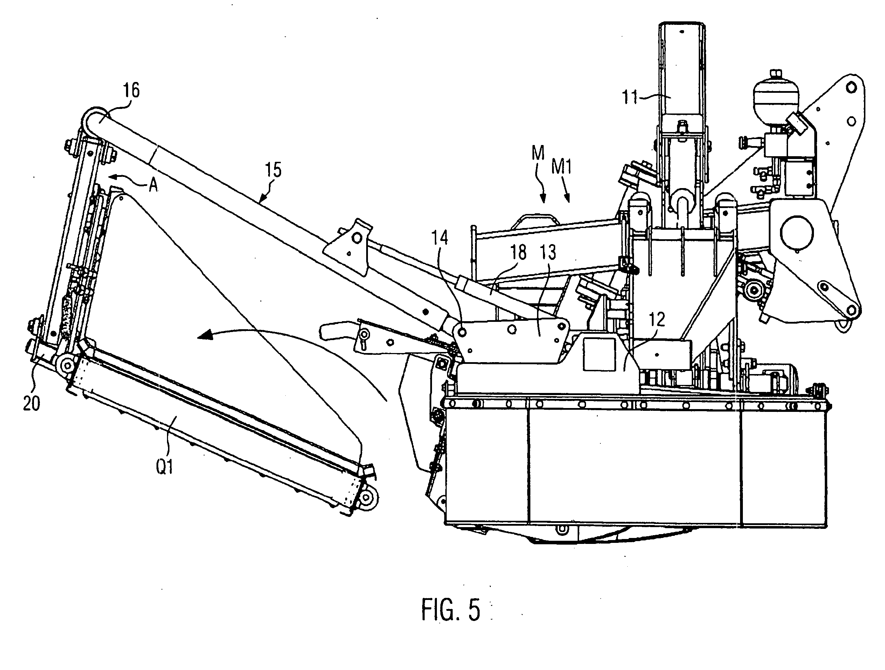

Fig. 5 zeigt in einer Seitenansicht in Blickrichtung von der Mitte nach außen das Mähwerk M1 der Heck-Mäheinheit M in Arbeitsposition, wobei der daran montierte Querförderer Q1 über die Aufhängung A mit dem Tragrohr 19 und dem Aufhängungsteil 20 sowie den Lenkern 21 am Tragrahmen 15 positioniert ist. Der Tragrahmen 15 ist, wie erläutert, in den Schwenkachsen 14 in den Lagerungen 13 des Mähwerkrahmens 12 schwenkbar abgestützt und lässt sich über den Schwenkarm 11 mit dem Mähwerk M1 in eine Transportposition mit verringerter Transportbreite der Heck-Mäheinheit M überführen.

## Patentansprüche

1. Mähwerkskombination (K) mit mehreren Mähwerken (M1, M2, F), wobei mindestens ein Mähwerk (M1, M2) in Arbeitsfahrtrichtung (R) hinten einen Querförderer (Q1, Q2) aufweist, wobei zum Verstellen des Querförderers (Q1, Q2) quer zur Arbeitsfahrtrichtung (R) und relativ zum zugeordneten Mähwerk (M1, M2) eine von wenigstens einem Verstellglied (G) betätigte Verstellvorrichtung (V) vorgesehen und der Querförderer (Q1, Q2) an einem quer zur Arbeitsfahrtrichtung (R) relativ zu einem Tragrahmen (15) des Querförderers (Q1, Q2) verstellbaren Aufhängungsteil (20) einer am Tragrahmen (15) montierten Aufhängung (A) angebracht ist, **dadurch gekennzeichnet, dass** die Aufhängung (A) entweder als Lenkerparallelogramm (P) ausgebildet ist, dessen obere Seite (19) am Tragrahmen (15) montiert ist, dessen untere etwa bodenparallele Seite der Aufhängungsteil (20) ist, und in dem zwischen dem oberen und unteren Seiten (19, 20) mindestens zwei zueinander zumindest im Wesentlichen parallele Lenker (21) angelenkt sind, oder als nicht paralleles Gelenkviereck ausgebildet ist, in welchem beim Verstellen des Querförderers (Q1, Q2) dessen eines Ende eine größere Anhebebewegung ausführt als das andere Ende.

2. Mähwerkskombination nach Anspruch 1, **dadurch gekennzeichnet, dass** die Aufhängung (A) das mindestens eine Verstellglied (G) zum Verstellen des Querförderers (Q1, Q2) quer zur Arbeitsfahrtrichtung (R) aufweist, und dass der Tragrahmen (15) an einem Mähwerksrahmen (12) des Mähwerks (M1, M2) schwenkbar montiert ist.

3. Mähwerkskombination nach Anspruch 1, **dadurch gekennzeichnet, dass** der Querförderer (Q1, Q2) über das Verstellglied (G) zusätzlich in der jeweils gewählten Einstellposition quer zur Arbeitsfahrtrichtung (R) arretierbar ist.

4. Mähwerkskombination nach Anspruch 1, **dadurch gekennzeichnet, dass** das Stellglied (G) bezüglich der Lenker (21) schräggestellt an den oberen und unteren Seiten (19, 20) des Lenkerparallelogramms (P) oder des Gelenkvierecks angelenkt ist.

5. Mähwerkskombination nach Anspruch 1, **dadurch gekennzeichnet, dass** das Stellglied (G) in vorbestimmten Stufen oder stufenlos, vorzugsweise in seiner Wirklänge, verstellbar ist.

6. Mähwerkskombination nach Anspruch 1, **dadurch gekennzeichnet, dass** das Stellglied (G) der Verstellvorrichtung (V) eine mechanische oder elektromotorische Verstellspindel (26) oder ein elektromechanischer Aktuator oder ein doppelt wirkender Hydrozylinder (26') ist.

7. Mähwerkskombination nach Anspruch 1, **dadurch gekennzeichnet, dass** jeder Lenker (21) an der unteren Seite des Lenkerparallelogramms (P) oder Geienkvierecks in einer, vorzugsweise doppelwandigen, an dem als Querträger ausgebildeten Aufhängungsteil (20) montierten Stützstruktur (22) angelenkt ist, die wenigstens eine Anlenkstelle (24) auch für das oder für ein Stellglied (G) aufweist.

8. Mähwerkskombination nach wenigstens einem der vorhergehenden Ansprüche, **dadurch gekennzeichnet, dass** die Mähwerkskombination (K) zusätzlich zu einer Heck-Mäheinheit (M) wenigstens ein Frontmähwerk (F) umfasst, vorzugsweise mit Mittelschwadablage (1), und dass jeder Querförderer (Q1, Q2) der Heck-Mäheinheit (M) mit einem quer zur Arbeitsfahrtrichtung (R) orientierten Abgabeende (8, 9) zu einem aus der Mittelschwadablage (1) abgelegten Mittelschwad (2) weist.

9. Mähwerkskombination nach wenigstens einem der vorhergehenden Ansprüche, **dadurch gekennzeichnet, dass** die Verstellvorrichtung (V) entweder an der Mähwerkskombination (K) oder/und in einem mit der Mähwerkskombination (K) ausgestatteten Schlepper (S) fernbetätigbar ist.

## Claims

1. Mower combination (K) having a plurality of mower (M1, M2, F), wherein at least one mower (M 1, M2) comprises a transverse conveyer (Q1, Q2) at the back in the working direction of travel (R), wherein to adjust the transverse conveyor (Q1, Q2) transversely to the working direction of travel (R) and relative to the associated mower (M1, M2) an adjustment mechanism (V) actuated by at least one adjustment member (G) is provided and the transverse conveyor (Q1, Q2) is provided on a suspended part (20), which can be adjusted transversely to the working direction of travel (R) relative to a carrying frame (15) of the transverse conveyor (Q1, Q2), of a suspension (A) mounted on the carrying frame (15), **characterised in that** the suspension (A) is designed either as a steering rod parallelogram (P) whose upper side (19) is mounted on the carrying frame (15), whose lower side roughly parallel to the ground is the suspended part (20), and in which at least two at least substantially mutually parallel steering rods (21) are articulated between the upper and lower sides (19, 20), or is designed as a non-parallel jointed rectangle in which the one end of which executes a bigger lifting movement than the other end during adjustment of the transverse conveyor (Q1, Q2).

2. Mower combination according to claim 1, **characterised in that** the suspension (A) comprises the at least one adjustment member (G) for adjusting the transverse conveyor (Q1, Q2) transversely to the working direction of travel (R), and **in that** the carrying frame (15) is pivotally mounted on a mower frame (12) of the mower (M1, M2).

3. Mower combination according to claim 1, **characterised in that** the transverse conveyor (Q1, Q2) can also be arrested by way of the adjustment member (G) in the respectively chosen setting position transversely to the working direction of travel (R).

4. Mower combination according to claim 1, **characterised in that** in relation to the steering rods (21) the control member (G) is articulated to the upper and lower sides (19, 20) of the steering rod parallelogram (P) or the jointed rectangle.

5. Mower combination according to claim 1, **characterised in that** the control member (G) can be adjusted in predetermined stages or continuously, preferably along its active length.

6. Mower combination according to claim 1, **characterised in that** the control member (G) of the adjustment mechanism (V) is a mechanical or electromotive adjustment spindle (26) or an electromechanical actuator or a dual-acting hydrocylinder (26').

7. Mower combination according to claim 1, **characterised in that** each steering rod (21) is articulated to the lower side of the steering rod parallelogram (P) or jointed rectangle in a preferably double-walled supporting structure (22) mounted on the suspended part (20) designed as a transverse carrier, and this comprises at least one articulation point (24) for the or a control member (G) as well.

8. Mower combination according to at least one of the preceding claims, **characterised in that** the mower combination (K) also comprises at least one front mower (F) in addition to a rear mowing unit (M), preferably with central swath deposit (1), and **in that** each transverse conveyor (Q1, Q2) of the rear mower unit (M) points with a deposit end (8, 9) oriented transversely to the working direction of travel (R) to a central swath (2) depositing from the central swath deposit (1).

9. Mower combination according to at least one of the preceding claims, **characterised in that** the adjustment mechanism (V) can be remotely actuated either on the mower combination (K) or/and in a tractor (S) fitted with the mower combination (K).

## Revendications

1. Combinaison de faucheuse (K) comprenant plusieurs faucheuses (M1, M2, F), dans laquelle au moins une faucheuse (M1, M2) comporte un convoyeur transversal (Q1, Q2) à l'arrière selon la direction d'avancement (R), dans laquelle un dispositif de réglage (V) actionné par au moins un organe de réglage (G) est pourvu pour régler le convoyeur transversal (Q1, Q2) transversalement à la direction d'avancement (R) et par rapport à la faucheuse associée (M1, M2), et le convoyeur transversal (Q1, Q2) est agencé sur une pièce de suspension réglable (20) transversale à la direction d'avancement (R) par rapport à un châssis de support (15) du convoyeur transversal (Q1, Q2) d'une suspension (A) montée sur le châssis de support (15), **caractérisée en ce que** la suspension (A) est constituée soit sous forme d'un parallélogramme d'articulation (P) dont le côté supérieur (19) est monté sur le châssis de support (15), dont le côté inférieur sensiblement parallèle au sol est la pièce de suspension (20), et dans lequel au moins deux bras de liaison (21) sensiblement parallèles entre eux sont articulés entre les côtés supérieur et inférieur (19, 20), soit sous forme d'un quadrilatère d'articulation non parallèle dans lequel, lors du réglage du convoyeur transversal (Q1, Q2), une extrémité effectue un plus grand déplacement de levage que l'autre extrémité.

2. Combinaison de faucheuse selon la revendication 1, **caractérisée en ce que** la suspension (A) comporte l'au moins un organe de réglage (G) pour régler le convoyeur transversal (Q1, Q2) transversalement à la direction d'avancement (R), et **en ce que** le châssis de support (15) est monté de manière pivotante sur un châssis de faucheuse (12) de la faucheuse (M1, M2).

3. Combinaison de faucheuse selon la revendication 1, **caractérisée en ce que** le convoyeur transversal (Q1, Q2) peut en outre être arrêté par l'organe de réglage (G) transversalement à la direction d'avancement (R) dans la position de réglage sélectionnée respective.

4. Combinaison de faucheuse selon la revendication 1, **caractérisée en ce que** l'organe de réglage (G) est articulé transversalement aux bras (21) sur les côtés supérieur et inférieur (19, 20) du parallélogramme d'articulation (P) ou du quadrilatère d'articulation.

5. Combinaison de faucheuse selon la revendication 1, **caractérisée en ce que** l'organe de réglage (G) est réglable par pas prédéterminés ou en continu, préférablement dans sa longueur efficace.

6. Combinaison de faucheuse selon la revendication 1, **caractérisée en ce que** l'organe de réglage (G) du dispositif de réglage (V) est une vis de réglage mécanique ou à moteur électrique (26), un actionneur électromécanique ou un vérin hydraulique à double effet (26').

7. Combinaison de faucheuse selon la revendication 1, **caractérisée en ce que** chaque bras (21) est articulé sur le côté inférieur du parallélogramme d'articulation (P) ou du quadrilatère d'articulation dans une structure de support (22) préférablement à double paroi montée sur la pièce de suspension (20) constituée comme un support transversal, qui comporte au moins une position d'articulation (24) pour un organe de réglage (G).

8. Combinaison de faucheuse selon au moins l'une des revendications précédentes, **caractérisée en ce que** la combinaison de faucheuse (K) comporte, outre une unité de faucheuse arrière (M), au moins une faucheuse frontale (F), préférablement avec un déverseur d'andain central (1), et **en ce que** chaque convoyeur transversal (Q1, Q2) de l'unité de faucheuse arrière (M) avec une extrémité de décharge (8, 9) orientée transversalement à la direction d'avancement (R) est orienté vers un andain central (2) déposé par le déverseur d'andain central (1).

9. Combinaison de faucheuse selon au moins l'une des revendications précédentes, **caractérisée en ce que** le dispositif de réglage (V) peut être commandé à distance depuis la combinaison de faucheuse (K) et/ou depuis un tracteur (S) équipé de la combinaison de faucheuse (K).
